# EUROPEAN PATENT SPECIFICATION

(11) **EP 2 504 496 B1**
(45) Date of publication and mention of the grant of the patent: **29.06.2016**
(21) Application number: 10784294.0
(22) Date of filing: 23.11.2010
(51) Int. Cl.: E02B 3/06

(54) **VERTICAL MARITIME STRUCTURE WITH MULTIPLE UNIT CHAMBERS FOR ATTENUATION OF WAVE REFLECTION**
VERTIKALE MEERESKONSTRUKTION MIT KAMMERN MIT MEHREREN EINHEITEN ZUR ABSCHWÄCHUNG DER WELLENREFEXION
STRUCTURE MARITIME VERTICALE COMPRENANT DE MULTIPLES CHAMBRES UNITAIRES AFIN D'ATTÉNUER LA RÉFLEXION DES VAGUES

(30) Priority: 24.11.2009 ES 200931049
(43) Date of publication of application: 03.10.2012
(73) Proprietor: CYES MARITIME WORKS, S.L., 46008 Valencia (ES)
(72) Inventor: MEDINA FOLGADO, Josep, E-46013 Valencia (ES); GONZALEZ-ESCRIVA, José Alberto, E-46013 Valencia (ES); FORT ALARCON, Lisardo Manuel, E-46013 Valencia (ES); MARTINEZ COLLADO, Silvia María, E-46013 Valencia (ES); DE LOS DOLORES BALAGUER, Camilo, E-46013 Valencia (ES); PONCE DE LEON CANTAVELLA, Daniel, E-46013 Valencia (ES); MANUEL ALONSO, Jose, E-46013 Valencia (ES); YAGÜE VALDIVIESO, Diego, E-46013 Valencia (ES); GARRIDO CHECA, Joaquin, E-46013 Valencia (ES); BERRUGUETE NAVARRO, Antonio, E-46013 Valencia (ES)
(74) Representative: Carpintero Lopez, Francisco
(86) International application number: PCT/EP2010/068000
(87) International publication number: WO 2011/064196

(56) References cited:
- WO-A1-02/48464
- ES-A1- 2 262 405
- ES-A2- 2 048 055
- FR-A5- 2 158 771
- GB-A- 1 523 411
- GB-A- 2 197 370
- JP-A- 2000 144 674
- NL-A- 7 306 025

## Description

### Object of the Invention

Within the field of port and maritime constructions, the invention provides a structure adequate for attenuation wave reflection, according to the preamble of claim 1.

The invention is applicable to conventional structures with a vertical exterior face, in other words to vertical maritime structures, including quays and vertical breakwaters. Specifically, the invention is applicable to quays and vertical breakwaters constructed using prefabricated reinforced-concrete caissons with lightened interior cells, referred herein as caissons-type structures, and quays made of concrete blocks, referred herein as block-type structures.

### Background of the Invention

Conventional quays are maritime structures to berth ships and boats, having a vertical face with high wave reflection to waves coming from the harbor basin or floating area where the quays are placed. To attenuate the wave reflection and the corresponding energy amplification in the nearby basin or floating area, complementary constructive elements are added to the structure to reduce the wave reflection in the floating areas. These elements include slopes protected with quarry stones, beaches and pilled supported quays with rock revetment. Furthermore, various typologies have been developed for low wave reflection elements which allow for an efficient reduction of wave reflection but present numerous problems, such as the poor effectiveness to attenuate the reflection of low frequency waves with large wave periods.

Thus, breakwaters are maritime constructions designed to reduce or to almost eliminate the transmission of the energy of wind waves, creating a sheltered area in which quays, berthing points, mooring points and other usable elements are placed. The fundamental typologies are the rubble-mound breakwater and the vertical breakwater. The rubble-mound breakwater creates the wave shelter by breaking the waves on the slope and producing low wave reflection. The vertical breakwater creates the wave shelter by reflecting the incident wave energy. The rubble-mound breakwater typology, with less wave reflection, is the most convenient for navigation and the environment; however, on high quality foundation soils, the vertical typology may reduce the construction costs, and avoid some of materials supply problems and environmental impacts, favoring the use of the vertical typology versus the rubble-mound typology. In order to minimize the drawbacks of the high wave reflection of the vertical breakwaters, analogously to the quays, over the years the addition of complementary constructive elements has been proposed. As in the case of quays, with vertical breakwaters the aim is to minimize the environmental damages generated by the reflected waves to navigation and to the neighboring beaches.

Vertical maritime structures are being favored because of the need to exploit the harbor space to the limit and allow for the maximum port operative time. The present invention addresses such vertical maritime structures and aims to attenuate the wave reflection without having to add anti-reflective complementary constructive elements.

In order to reduce the wave reflection of the vertical maritime structures, a variety of structures has been proposed known as Jarlan-type structures. The Jarlan-type structure, described in the patent US-3118282, consists of a perforated chamber which dissipates, basically, the wave energy by phase delay between the wave reflection on the front permeable wall and the impermeable back wall.

In all known structures derived from the Jarlan- type, the technical effects to produce the attenuation of wave reflection are the dissipation of energy by turbulence and friction generated in the permeable wall and, more than anything, the reduction of wave reflection by energy dissipation due to the process of superposition of incident and reflected wave trains with different angle phases, propagation direction and orientation if applicable.

In the document of the patent ES-2262405, a vertical structure for attenuation of wave reflection as referred previously is described. It is a caisson-type structure with at least two rows of cells, in which the first two cells are connected to each other forming a dissipating chamber between a slotted vertical front wall and an impermeable back wall, being the dissipating chamber divided by an intermediate opening.

In the document of the patent JP-2002275855, a vertical structure of block-type quay is shown in which to apply the concept of the Jarlan-type structure in which the attenuation of wave reflection is transversal and not perpendicular to the frontal vertical face. The block design forms a dissipating chamber not extended in the perpendicular direction to the frontal face of the vertical structure, in which the waves to be attenuated are incident, but extended with a certain inclination with respect to it, and also with an intermediate opening.

Other known vertical maritime structures adequate to reduce the wave reflection are a row of piles with certain permeability (JP-62170606), slotted multiple walls (US-4154548) or placing multiple walls in front of breakwaters and quays (EP-88440048).

However, all the existing anti-reflective solutions for vertical maritime structures have the drawback of their exiguous efficacy to reduce the reflection of low frequency waves. Their inadequateness when facing low frequency waves is derived from the fact that the incident wave has a first reflection on the frontal wall or the most advanced part of the structure and the last reflection on the most posterior part reached by the flow; if the roundtrip time of the flow between the frontal wall and the back wall is much less than one half of the incident wave period, there is no significant interference between reflected waves, and the anti-reflective efficacy is low. In other words, if the width of the anti-reflective zone of the breakwater or quay is much less than a quarter of the wavelength, the anti-reflective effectiveness is quite small. That imposes the need to reserve large space for the anti-reflective zone generating high construction costs compared to conventional typologies. Thus, to construct anti-reflective vertical breakwaters or quays which are effective for low frequency waves, with high wave periods associated with intense sea storms and swell waves with wavelengths above 100 meters, it would be necessary to establish an anti-reflective zone width above 10 meters, impracticable in most of the block-type quays and impracticable or very costly in caisson-type quays and breakwaters because it would affect more than two rows of cells. For lower frequencies, with wave periods higher than 30 seconds associated to wind waves, groups of waves, basins resonance and other low frequency waves, the blocks, which are usually a few meters in width, and the caisson-type breakwaters, which are usually up to 20 meters in width, are not capable of constructing anti-reflective zones wide enough to attenuate the reflection of the low frequency waves.

In short, the technical problem, which is the focus of in the present invention, is to provide a vertical port or maritime structure adequate for the attenuation of the wave reflection and efficient for wind waves and low frequency waves.

### Description of the Invention

In order to attenuate the wind waves and low frequency waves in vertical maritime structures such as quays and vertical breakwaters with usual structure widths and constructive methods, the invention includes different dissipation chambers which aim to implement the technical effect of the Jarlan-type structures. As a novelty, the different dissipating chambers are extended horizontally forming circuits of several units, cells or blocks, along different directions, allowing for an extension of the pathway of the circulation of the flow induced by the waves, and thus increasing the anti-reflective effectiveness for the lowest frequency waves.

For a better understanding of the present invention, the following concepts which define the vertical maritime structure, object of the invention, are presented. "Unit" is defined as the hollowed block in the case of block-type quay and the cell in the case of caisson-type breakwaters and quays; "dissipation chamber" is the set of interconnected units forming a circuit isolated from other "dissipation chambers"; "circuit" is the space or pathway travelled by the flux of waves through a dissipation chamber from the incident point to the partial dissipation and/or exit from the attenuation system as a function of the established chamber characteristics; "frontal" is the front face of the vertical structure on which the waves are incident; "lateral" is any of the vertical or almost vertical surfaces in the dissipating chamber parallel to the direction of the wave flow; "back wall" is the surface located at the end of the dissipating chamber; "superior" and "inferior" are the horizontal or almost horizontal surfaces located above and below, respectively, the dissipating chamber referred to the circulation direction; "anti-reflective zone" is the volume with hollows of the maritime vertical structure located near the frontal face of the structure designed to attenuate wave reflection in which the dissipating chambers are located; and "anti-reflective zone width" is the maximum distance between the frontal face of the structure and the more distant point of the anti-reflective zone in a direction perpendicular to the frontal face of the structure.

The maritime structure of the invention has one or more dissipating chambers opened in the frontal face of the structure. Each dissipating chamber is formed by a set of interconnected units through intermediate openings, extending horizontally in at least two different directions of circulation. The typical dissipating chamber width, measured perpendicularly to the wave flow, is at least one unit, which is the cell width or the block width as placed in the structure. On the other hand, the length of the dissipating chamber is determined by the route length of the wave flow within the dissipating chamber between the frontal wall and the back wall, or half the length of the circuit of units if the chamber has to frontal openings and does not have back wall.

Therefore, the present invention aims to be a vertical maritime structure for attenuation of wave reflection according to claim 1 which includes:
- an anti-reflective zone, having one or more dissipating chambers, isolated from each other, opened through one or several openings on the frontal face of the structure;
- one or several dissipating chambers, formed by a set of interconnected units through intermediate openings between contiguous units;
- impermeable lateral and posterior walls of each dissipating chamber which may contain additional elements to increase the energy losses by friction within the chamber;
- the dissipating chamber width, being at least one unit and
- the dissipating chamber, horizontally extended longitudinally with at least two different directions of circulation.

The units may be squared, rectangular or circular cells, or squared or rectangular blocks.

As particular implementation of the invention, the maritime structure is a caisson-type quay or caisson-type breakwater with cells in which each dissipating chamber is formed by a set of cells interconnected through the intermediate openings between contiguous cells, being impermeable the lateral and posterior walls of the dissipating chamber.

The maritime structure is a block quay in which each dissipating chamber is formed by a set of hollowed blocks, interconnected through intermediate openings between contiguous blocks, being impermeable the lateral and posterior walls of the dissipating chamber.

The length of the dissipating chamber is longer than the width of the anti-reflective zone of the structure. As particular implementation, such length is equal to or higher than two units of cell or block.

In the maritime structure of the invention, both the frontal opening and the intermediate openings of the dissipating chamber can be a window, slots or holes. As preferred embodiment, such openings have a permeability that is keep constant or decreases along the dissipating chamber, from the frontal opening to the back wall, or to half the length of the dissipating chamber if the dissipating chamber has two frontal openings and no posterior wall.

The cells of the maritime caisson structure may have different configurations described by plan cross-sections such as squared, rectangular, circular or polygonal, being today the most frequently used the squared or circular.

In the case of a structure formed with squared units - cells or blocks - , the directions of circulation are defined in the present document as the different directions parallel to the lateral walls of each dissipation chamber, being each direction defined by at least two units, cells or blocks. In the case of a structure formed with circular units, the directions of circulation are defined in the present document as the directions parallel to the vertical plane externally tangent to the circular units which constitutes the lateral wall of the dissipating chamber, being each direction defined by at least two units. Analogously the concept of direction of circulation would be defined as in the case of which the unit were not circular or squared, with object referred to a principal direction of circulation of the flux of the waves.

The invention provides dissipating chambers forming circuits of units with lengths greater than the width of the anti-reflective zone of the breakwater or quay. The optimum number and the length of the dissipating chambers with the anti-reflective circuits of multiple units in breakwaters or quays will depend on the local wave climate and incident wind waves, on the one hand, and the characteristics of ships and boats, on the other hand. When the incident waves, whose reflection is to be attenuated, do not have low frequency, it may be convenient simply to use the conventional Jarlan-type chambers with a width of the anti-reflective zone greater than 10% of the wavelength. If very low frequency waves are to be attenuated, as the resonance waves in harbor basins, then it will be specially appropriate to use the anti-reflective circuits of multiple units of considerable length; in this case, although the frontal structure wall would be impermeable in a large proportion for a fixed anti-reflective zone, the few permeable zones would be very efficient in reducing the reflection of the very low frequency waves.

The present invention provides an effective response to the problem of reduction in the wave reflection on quays and vertical breakwaters facing wind waves and waves with high periods, without enlarging the width of the anti-reflective zone of the structure. Additionally, the invention constitutes a practical solution from the constructive point of view, as well as being economically viable. Furthermore, the dissipating chambers with anti-reflective circuits of multiple units object of the invention are applicable not only to vertical structures of blocks or caissons, but also to contours of basins, crown-walls, channels of navigation and, in general, structures with an almost vertical or vertical face in which the aim is to reduce the wave reflection of wind waves and low frequency water oscillations such as wind waves and oscillations associated with intense storms, resonance waves in harbor basins, etc.

More specifically, the dissipating chambers with circuits of multiple units in the present invention, can be defined for two types of vertical structures: (a) caisson-type vertical structures for quays and breakwaters in more than 10 meters water depth and (b) block-type vertical structures for quays constructed in less than 18 meters water depth. In the case of caisson structures, the upper part of the frontal row or rows of cells of such caissons are modified until a certain water depth to form floodable cells connected between them creating circuits, separated from other circuits. These circuits have one extreme opened to the exterior in the frontal structure face and an other extreme closed and impermeable having an approximate length from 10% to 20% of the mean wavelength whose reflection is to be reduced, or two extremes open to the exterior in the frontal structure face, with an approximate length from 20% to 40% of the mean wavelength whose reflection is to be reduced. In the case of block-type quays, it may be constructed on site or using modular anti-reflective elements prefabricated on ground to replace the upper row or rows of blocks creating with them the dissipating chamber with circuits of blocks of greater length than the unit of block in the quay. In the case of using hollowed blocks, the elements only have two vertical permeable faces through which the water can flow to the following block of the circuit, except for the element located at the end of each circuit which will only contain a permeable face to allow entry to a unit without connections with other units in the horizontal plane.

Thus, although the quay or breakwater has an anti-reflective zone of a few meters in width - typically 4 meters in block-type quays and 7 meters in caisson-type quays and breakwaters-, the dissipating chambers with circuits of multiple units permit an effective reduction in high-period wave reflection and not only ship waves and low period wind waves. On the other hand, the possibility of having circuits of multiple units with longer or shorter length with the same anti-reflective zone width in breakwaters and quays, makes it suitable to the wave local conditions and the long waves incident on the structure, which makes it possible, therefore, to obtain optimum specific designs adapted to the local conditions in each stretch of the construction. For instance, the caissons used in the breakwater of a commercial port may have long circuits of multiple units, adequate to reduce the wave reflection of the most frequent and most intense wave storm in the year which usually is responsible for the port being closed; the caissons used in quays more exposed to the wind waves which penetrate through the harbor entrance may have shorter circuits of multiple units, adequate to reduce the wave reflection of the wave storms which cause the maximum inner harbor agitation every year, and the caissons located in the most sheltered areas of the port may have much longer circuits of multiple units, adequate to reduce the wave reflection of the long waves associated with of the wave groups of the storms, the harbor basin resonance and other low frequency waves. That is to say, instead of be forced to use in practice the same solution in all situations, the dissipating chambers with circuits of multiple units permit the caissons or blocks to be adapted in order to achieve the adequate wave reflection reduction in each stretch of the breakwater or quay of a harbor without enlarging the width of the anti-reflective zone.

A difference between the conventional anti-reflective systems with dissipating chambers of one and two units, in which the optimum permeability of the intermediate and frontal walls is about 30%, which has a relevant influence on the reduction of wave reflection, in the circuits of multiple units the optimum permeability is higher and, in the case of the caissons with circular and squared or rectangular cells, the maximum permeability will usually be limited by constructive constraints. Two rules must be followed to establish the permeability within each circuit: (a) the permeability of the entrance to each unit must be maintained or decreased from the exterior wall to the interior and (b) the mean permeability should be higher if the length of the dissipating chamber is higher and the water depth within the chamber is lower. Approximately, one can use the mean porosity equal to 20%+ 10%[N^{1/2} +(h/hc)^{1/4}], in which N is the length of the dissipating chamber measured as the number of units of the circuit, and h/hc is the ratio between the water depth in the basin where the vertical maritime structure is located and the water depth of the dissipating chamber. Thus, for instance, if the water depth of the dissipating chamber is one-fifth the water depth in the harbor basin, h/hc=5, and if the dissipating chamber has a circuit formed by one unit opened to the frontal wall, four intermediate units and one posterior unit, the final circuit has a length of N=6 units, then the optimum permeability is approximately p1 and p2= 70% for the entrance to the frontal unit and the adjacent unit, p3 and p4=60% for the entrance to the third and fourth units of the circuit, and p5 and p6=50% for the entrance to the fifth unit and the entrance to the posterior unit. If the dissipating chamber does not have a closed posterior unit and it is formed with two units opened to the frontal wall and four intermediate units, the effective length is one half, N=6/2, because the flux penetrates from the frontal face of the structure to the interior and the approximate permeability to be used is 55% for the entrance to the two units opened to the frontal face of the structure, 50% for the entrance to the contiguous units to the frontal units, and 45% for the remaining connections between internal units of the dissipating chamber.

In order to increase the stability and the energy dissipation processes within the dissipating chambers, the units can be partially filled with resistant elements such as stones, prefabricated pieces or other specific elements which increase the loss of energy by friction and the weight of the structure.

Therefore, the cells which are partially opened and connected in the caisson-type structures for breakwaters and quays, may form dissipating chambers with circuits of multiple units of a length grater than the width of the anti-reflective zone to effectively reduce the reflectivity of wind waves and low frequency waves and adapting better to the local agitation conditions in each stretch of breakwater or quay. It can be said that the anti-reflective effectiveness of the circuits of multiple units depends essentially on three factors: (a) the width of the anti-reflective zone, (b) the water depth within the dissipating chambers and (c) the length of the circuits; the first two factors are usually conditioned by constructive constraints and the third factor is the one which must be determined in each case to reduce as efficiently as possible the wind waves and the incident waves in each stretch of the construction.

The formation of dissipating chambers with circuits of multiple units in caissons for breakwaters and quays implicitly involves the horizontal separation of one circuit from the others, because the cells of the caissons are separated and are only opened or connected to the cells corresponding to each circuit of the desired length to cause a horizontal entry and exit flow. In the case of circuits of multiple units formed in block-type quays, care must be taken to not have connection between blocks in different circuits; the circuit block units are defined in the horizontal plane and may have vertical connections between pairs of blocks or elements located one above the other. However, there should be no flow through the horizontal connections of blocks from different circuits. As a general rule, the units of the same dissipating chamber must not be connected unless those units have been defined as contiguous units within the same circuit of units, because that would reduce the effective length of the circuit.

### Description of the Drawings

To complement the description herein and to enhance the understanding the features of the invention, according to a preferred practical embodiment thereof, a set of drawings is attached as an integral part of said description, in which the following is shown with an illustrative and non-limiting character:

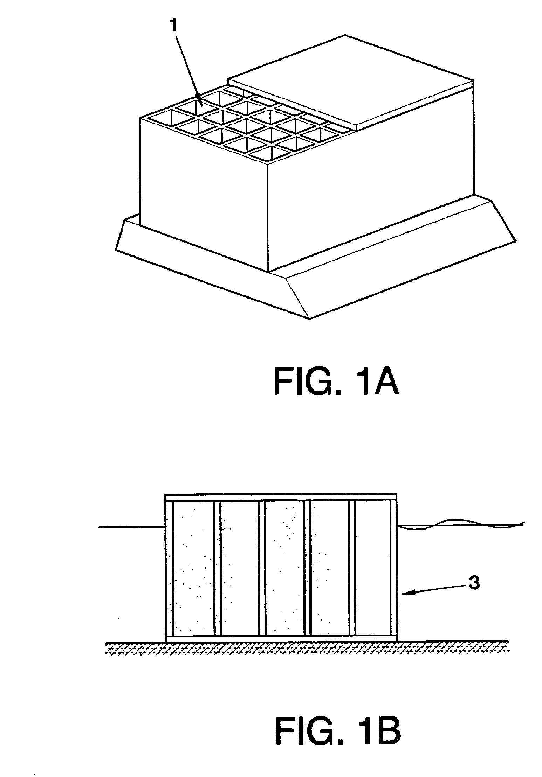

Figure 1.- This representation of a vertical maritime structure of cells which the invention addresses, corresponding specifically to a caisson-type quay, provides a perspective (1 A) and a vertical cross-section (1 B).

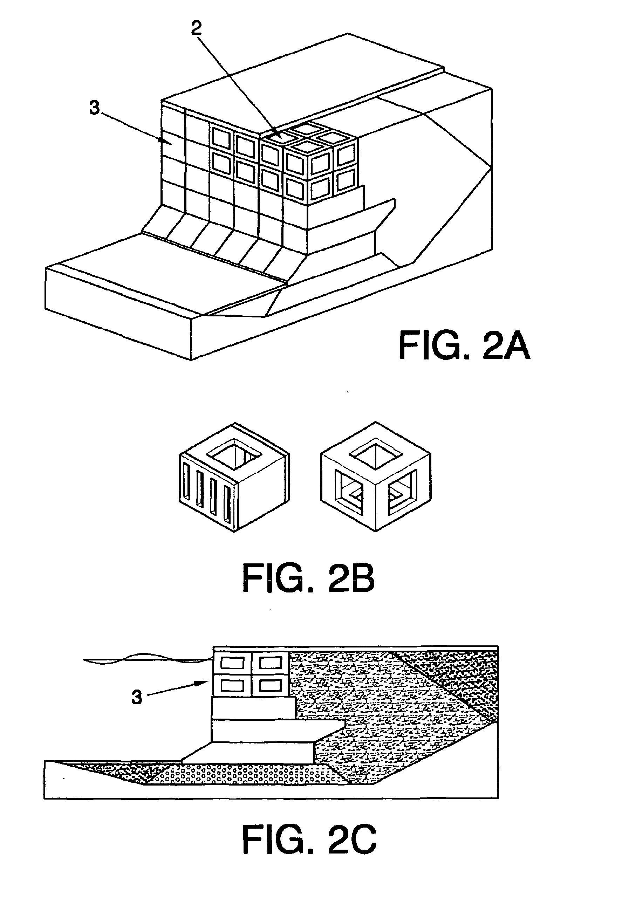

Figure 2.- This representation of a vertical maritime structure of blocks which the invention addresses, corresponding specifically to a block-type quay, provides a perspective (2A) and a vertical cross-section (2C). Two different typologies of block elements are also shown to form the dissipating chambers of multiple units (2B). Figure 2B shows two typical blocks, one preferred for the frontal row (the slotted one) and the other preferred for the posterior row.

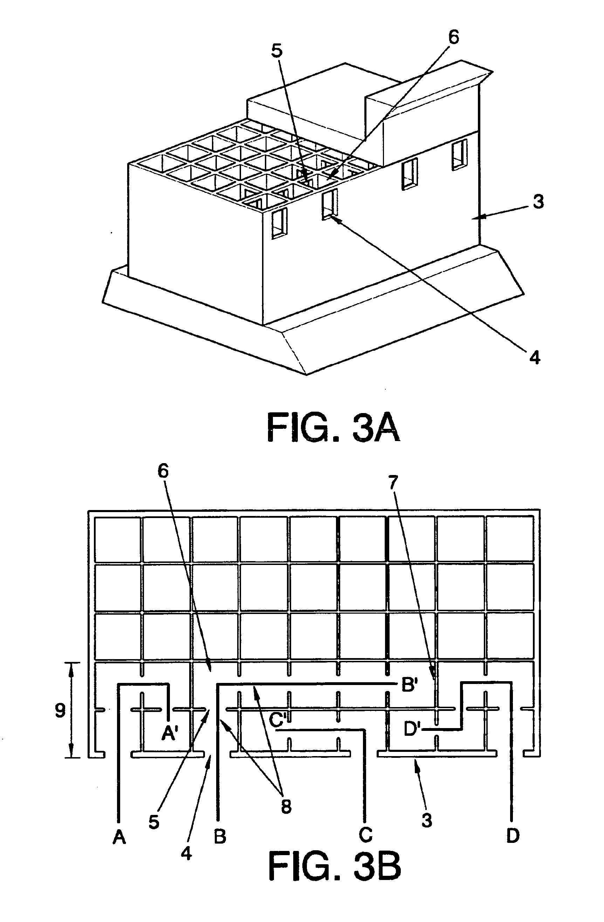

Figure 3.- This representation shows a caisson-type vertical breakwater of squared cells after the invention, a perspective (3A) and an schematic plan (3B), with an anti-reflective zone of two cells width in which circuits of multiple cells have been formed with different lengths: 6 units (B-B'), 5 units (D-D'), 4 units (A-A') and 3 units (C-C'), which permit a reduction in wave reflection over a wide range of wave periods.

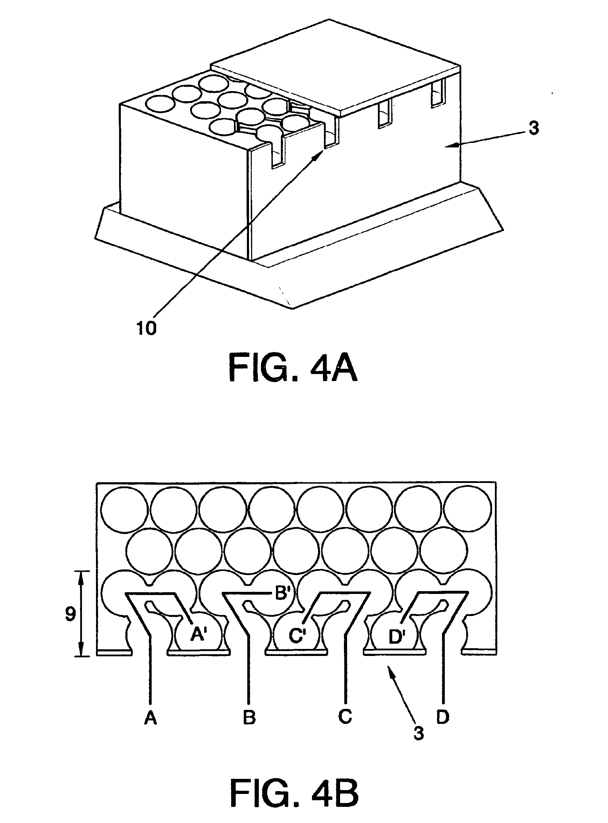

Figure 4.- This representation shows a caisson-type quay of circular cells after the invention, a perspective (4A) and an schematic plan (4B), with an anti-reflective zone of two cells' width in which circuits of multiple cells have been formed with different lengths: 4 units (A-A', C-C' and D-D') and 3 units (B-B').

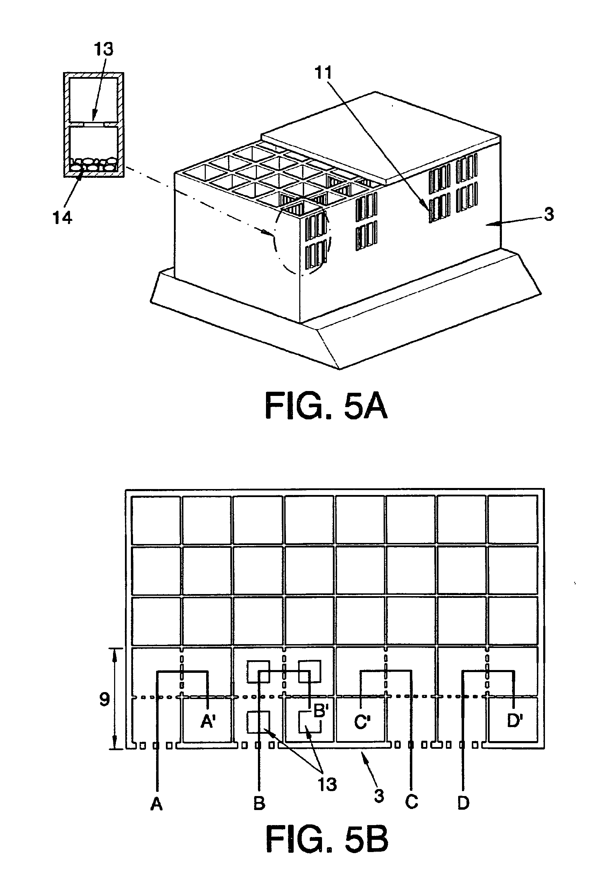

Figure 5.- This representation shows a caisson-type quay of squared cells after the invention, a perspective (5A) and an schematic plan (5B), with an anti-reflective zone of two cells' width in which circuits of multiple units have been formed with the same length: 4 units (A-A', B-B', C-C' and D-D'). The cells forming the circuit B-B' have additional elements which increase the roughness of the dissipating chamber bed and, as referred in the description of the Invention, increase the wave energy losses by friction.

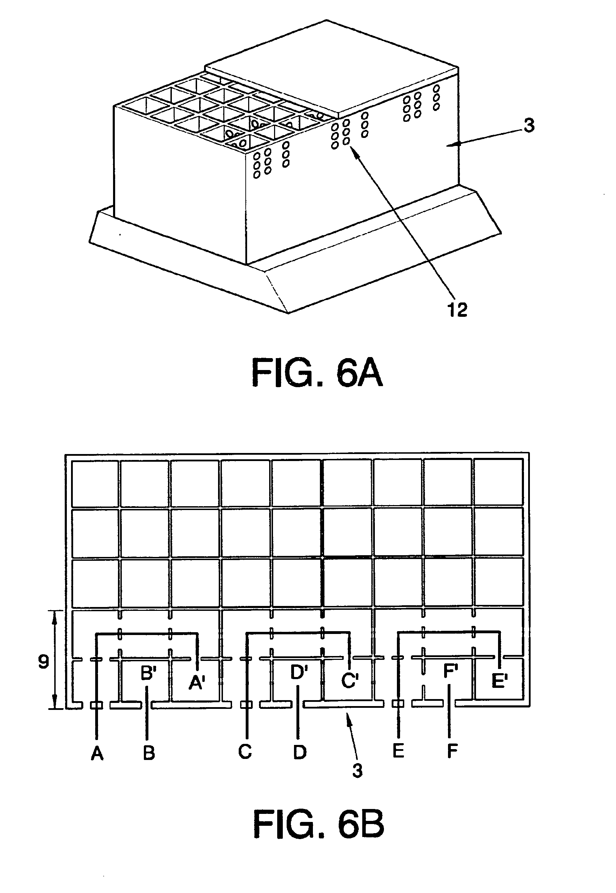

Figure 6.- This representation shows a caisson-type quay of squared cells after the invention, a perspective (6A) and an schematic plan (6B). Figure 6B, shows the quay with an anti-reflective zone of two units' width in which three circuits of multiple units of 5 units' length (A-A', C-C' and E-E'), and three isolated units (B-B', D-D' and F-F').

### Description of the Preferred Embodiment of the Invention

The Figures 1, 2 and 3 show vertical maritime structures to which the invention addresses: caisson-type quay (Figure 1), block-type quay (Figure 2) and caisson-type vertical breakwater (Figure 3).

In Figures 3, 4, 5 and 6, it can be observed how the dissipating chamber with the circuits of multiple units (6) can be formed from a caisson-type structure with cells (1) squared (Figures 3, 5 and 6) or circular (Figure 4) making frontal openings (4) in the frontal face of the structure (3) and intermediate openings (5), including windows (10), slots (11) or holes (12) in the zone near the mean sea level, forming in this way dissipating chambers (6) with an adequate number of units for the period of the waves for which reflection is to be reduced.

Analogously, the dissipating chambers with circuits of multiple cells (6) would be formed in vertical maritime block-type structures (2), placing the block-type hollowed elements with frontal openings (4) and intermediate openings (5) including windows (10), slots (11) or holes (12) as shown in Figure 2A, through which the blocks of dissipating chamber (6) are interconnected with the desired length circuit.

The dissipating chambers with circuits of multiple cells can be formed with different lengths, as shown in Figure 3, to be effective in the attenuation of the wave reflection in a wide range of low frequencies and to only somewhat less effective in the attenuation of the reflected waves of high frequency. The intermediate openings (5) of the cells (1) or blocks (2) can be window-type (10) (Figures 3 and 4), slots (11) (Figures 5A and 5B) and holes (12) (Figures 6A and 6B).

The circuits of multiple units or dissipating chambers (6) can also be formed of similar length, as shown in Figure 5 to be more effective in the attenuation of the wave reflection in a limited range of low frequencies and to be less effective in the attenuation of the wave reflection of high frequency waves.

The dissipating chambers with circuits of multiple units (6) can be formed with equal lengths and repetitive circuits as shown in Figure 5B, which will always attenuate in a more effective way the wave reflection of higher periods and in a less effective way the waves of lower periods.

The dissipating chambers with long circuits of many units can be built next to isolated anti-reflective units as shown in Figure 6B to be simultaneously effective in the attenuation of wave reflection of very low frequency waves, as well as ship waves. The intermediate openings (5) between contiguous cells (1) or blocks (2) in the same dissipation chamber must be permeable. As a general rule, less permeable will be the frontal opening of the isolated cells or blocks and the opening between the inner cells or blocks in circuits with multiple units, being of higher permeability the openings between units of longer circuits and units near the frontal face of the structure.

Finally, the circuits of multiple units can be very long so as to have the maximum effectiveness in the attenuation of the wave reflection of the lowest frequency, as the resonance waves in harbor basins, although they show low effectiveness to attenuate the wave reflection of the ship waves having high frequency.

The cells or blocks of the dissipating chamber can be partially filled with elements to increase the roughness of the dissipation chamber bed such as stones (14) or other elements, as shown in Figure 5A, to increase the energy losses by friction in the entry and exit flow from the circuit, collaborating in the attenuation of the reflected energy.

## Claims

1. Vertical maritime structure for the attenuation of wave reflection, comprising:
a frontal face (3), an anti-reflective zone (9) located near the frontal face (3) to attenuate wave reflection, and incorporating several dissipation chambers (6),
wherein the dissipation chambers are opened on the frontal face (3) through openings (4), (10), (11), (12) made in the frontal face (3) of the structure,
wherein each dissipation chamber (6) is formed by a set of units selected from cells (1) or blocks (2) of the structure, and wherein adjacent units of each dissipation chamber (6) are interconnected through intermediate openings (5),
wherein the dissipation chambers have impermeable lateral and back walls (7),
wherein each dissipation chamber has a width of at least one cell (1) or block (2); and wherein each dissipation chamber extends horizontally in the structure forming circuits
**characterized in that** the dissipation chambers (6) are isolated from each other, wherein the circuits are formed by several interconnected cells (1) or blocks (2) with at least two different directions of circulation (8),
and wherein the length of one dissipation chamber is longer than the width of the anti-reflective zone (9) of the structure, wherein said width of the anti-reflective zone (9) extends from the vertical frontal face (3) to the more distant point of the anti-reflective zone (9) in a direction perpendicular to the vertical frontal face (3).

2. Vertical maritime structure for the attenuation of wave reflection, according to claim 1, **characterized in that** the units are selected from square, rectangular or circular cells" and blocks, with a square or rectangular section.

3. Vertical maritime structure, according to any one of the previous claims, **characterized in that** the frontal openings (4) and the intermediate openings (5) are selected from the group consisting of windows (10), slots (11) and holes (12).

4. Vertical maritime structure, according to claim 3, **characterized in that** the frontal openings (4) and the intermediate openings (5) have a permeability is kept constant or decreases in the direction of the length of the dissipation chamber passing from the frontal opening (4) towards the interior.

5. Vertical maritime structure, according to any one of the previous claims, **characterized in that** the dissipation chamber (6) contains specific elements (14) increasing the roughness of the chamber bed to increase the friction and the energy losses of the incident wind waves.

6. Use of the vertical maritime structure, defined in any one of the previous claims 1 to 5, as a quay.

7. Use of the vertical maritime structure, defined in any one of the previous claims 1 to 5, as a breakwater.

8. Use of the vertical maritime structure, defined in any one of the previous claims 1 to 5, as a crown-wall.

9. Use of the vertical maritime structure defined in any one of the previous claims 1 to 5, as a navigation channel bank.

## Patentansprüche

1. Vertikale Meereskonstruktion zum Abschwächen von Wellenreflexion, umfassend:
eine Vorderseite (3), eine nahe der Vorderseite (3) lokalisierte und mehrere Zerstreuungskammern (6) aufnehmende Antireflexionszone (9) zum Abschwächen von Wellenreflexion,
wobei die Zerstreuungskammern an der Vorderseite (3) durch in der Vorderseite (3) der Struktur gefertigte Öffnungen (4), (10), (11), (12) geöffnet sind,
wobei jede Zerstreuungskammer (6) durch eine Zusammenstellung von Einheiten, ausgewählt aus Zellen (1) oder Blöcken (2) der Struktur gebildet ist, und wobei benachbarte Einheiten jeder Zerstreuungskammer (6) durch zwischenliegende Öffnungen (5) miteinander verbunden sind, wobei die Zerstreuungskammern undurchlässige seitliche und rückwärtige Wände (7) aufweisen,
wobei jede Zerstreuungskammer eine Breite von mindestens einer Zelle (1) oder eines Blocks (2) aufweist; und wobei jede Zerstreuungskammer sich horizontal unter Bildung von Kreisbahnen in der Struktur erstreckt, **dadurch gekennzeichnet, dass** die Zerstreuungskammern (6) voneinander isoliert sind, wobei die Kreisbahnen durch mehrere miteinander verbundene Zellen (1) oder Blöcke (2) mit mindestens zwei verschiedenen Zirkulationsrichtungen (8) gebildet werden,
und wobei die Länge von einer Zerstreuungskammer länger ist als die Breite der Antireflexionszone (9) der Struktur, wobei die Breite der Antireflexionszone (9) sich von der vertikalen Vorderseite (3) zum entfernteren Punkt der Antireflexionszone (9) in einer zur vertikalen Vorderseite (3) senkrechten Richtung erstreckt.

2. Vertikale Meereskonstruktion zum Abschwächen der Wellenreflexion nach Anspruch 1, **dadurch gekennzeichnet, dass** die Einheiten ausgewählt sind aus quadratischen, rechteckigen oder kreisförmigen Zellen und Blöcken, mit einem quadratischen oder rechteckigen Abschnitt.

3. Vertikale Meereskonstruktion nach einem der vorstehenden Ansprüche, **dadurch gekennzeichnet, dass** die vorderseitigen Öffnungen (4) und die zwischenliegenden Öffnungen (5) ausgewählt sind aus der Gruppe bestehend aus Fenstern (10), Schlitzen (11) und Löchern (12).

4. Vertikale Meereskonstruktion nach Anspruch 3, **dadurch gekennzeichnet, dass** die vorderseitigen Öffnungen (4) und die zwischenliegenden Öffnungen (5) eine Durchlässigkeit aufweisen, die konstant gehalten wird oder in Richtung der von der vorderseitigen Öffnung (4) hin zum Inneren passierenden Länge der Zerstreuungskammer abnimmt.

5. Vertikale Meereskonstruktion nach einem der vorstehenden Ansprüche, **dadurch gekennzeichnet, dass** die Zerstreuungskammer (6) spezifische Elemente (14) enthält, die die Rauheit des Kammerbetts erhöhen, um die Reibung und Energieverluste der auftreffenden Windwellen zu erhöhen.

6. Verwendung der in einem der vorstehenden Ansprüche 1 bis 5 definierten vertikalen Meereskonstruktion als ein Kai.

7. Verwendung der in einem der vorstehenden Ansprüche 1 bis 5 definierten vertikalen Meereskonstruktion als ein Wellenbrecher.

8. Verwendung der in einem der vorstehenden Ansprüche 1 bis 5 definierten vertikalen Meereskonstruktion als eine Wellenbrecherkrone.

9. Verwendung der in einem der vorstehenden Ansprüche 1 bis 5 definierten Meereskonstruktion als ein Fahrrinnenufer.

## Revendications

1. Structure maritime verticale pour atténuer la réflexion des vagues, comprenant :
une face frontale (3), une zone anti-réfléchissante (9) située près de la face frontale pour atténuer la réflexion des vagues et incorporant plusieurs chambres de dissipation (6),
dans laquelle les chambres de dissipation sont ouvertes sur la face frontale (3) à travers des ouvertures (4), (10), (11), (12) ménagées dans la face frontale (3) de la structure,
dans laquelle chaque chambre de dissipation (6) est formée par un ensemble d'unités choisies parmi des cellules (1) ou des blocs (2) de la structure et dans laquelle des unités adjacentes de chaque chambre de dissipation (6) sont interconnectées par des ouvertures intermédiaires (5),
dans laquelle les chambres de dissipation ont des parois latérales et arrière imperméables (7),
dans laquelle chaque chambre de dissipation a une largeur d'au moins une cellule (1) ou d'un bloc (2) ; et dans laquelle chaque chambre de dissipation s'étend horizontalement dans la structure en formant des circuits, **caractérisée en ce que** les chambres de dissipation (6) sont isolées l'une de l'autre, dans laquelle les circuits sont formés par plusieurs cellules (1) ou blocs (2) interconnectés avec au moins deux directions de circulation (8) différentes, et
dans laquelle la longueur d'une chambre de dissipation est plus grande que la largeur de la zone anti-réfléchissante (9) de la structure, dans laquelle ladite largeur de la zone anti-réfléchissante (9) s'étend de la face frontale verticale (3) au point le plus distant de la zone anti-réfléchissante (9) dans une direction perpendiculaire à la face frontale verticale (3).

2. Structure maritime verticale pour atténuer la réflexion des vagues selon la revendication 1, **caractérisée en ce que** les unités sont choisies parmi des cellules et des blocs carrés, rectangulaires ou circulaires avec une section carrée ou rectangulaire.

3. Structure maritime verticale selon l'une quelconque des revendications précédentes, **caractérisée en ce que** les ouvertures frontales (4) et les ouvertures intermédiaires (5) sont choisies dans le groupe constitué de fenêtres (10), de fentes (11) et de trous (12).

4. Structure maritime verticale selon la revendication 3, **caractérisée en ce que** les ouvertures frontales (4) et les ouvertures intermédiaires (5) ont une perméabilité qui est maintenue constante ou diminue dans la direction de la longueur de la chambre de dissipation en passant de l'ouverture frontale (4) vers l'intérieur.

5. Structure maritime verticale selon l'une quelconque des revendications précédentes, **caractérisée en ce que** la chambre de dissipation (6) contient des éléments spécifiques (14) augmentant les aspérités du lit de la chambre pour augmenter le frottement et les pertes d'énergie des ondes de vent incidentes.

6. Utilisation de la structure maritime verticale définie dans l'une quelconque des revendications 1 à 5 comme quai.

7. Utilisation de la structure maritime verticale définie dans l'une quelconque des revendications 1 à 5 comme brise-lames.

8. Utilisation de la structure maritime verticale définie dans l'une quelconque des revendications 1 à 5 comme mur de couronnement.

9. Utilisation de la structure maritime verticale définie dans l'une quelconque des revendications 1 à 5 comme berge de canal de navigation.
